# EUROPÄISCHE PATENTSCHRIFT

(11) **EP 0 830 695 B1**
(45) Veröffentlichungstag und Bekanntmachung des Hinweises auf die Patenterteilung: **10.03.1999**
(21) Anmeldenummer: 96913527.6
(22) Anmeldetag: 25.04.1996
(51) Int. Cl.: H01B 17/30

(54) **ELEKTRISCH ISOLIERENDE GASDICHTE DURCHFÜHRUNG**
ELECTRICALLY INSULATING GASTIGHT FEEDTHROUGH
TRAVERSEE ETANCHE AUX GAZ AVEC ISOLATION ELECTRIQUE

(30) Priorität: 07.06.1995 DE 19520758
(43) Veröffentlichungstag der Anmeldung: 25.03.1998
(73) Patentinhaber: Emitec Gesellschaft für Emissionstechnologie mbH, 53797 Lohmar (DE)
(72) Erfinder: MAUS, Wolfgang, D-51429 Bergish Gladbach (DE); BRÜCK, Rolf, D-51429 Bergisch Gladbach (DE); KRUSE, Carsten, D-53797 Lohmar (DE)
(74) Vertreter: Kahlhöfer, Hermann, Dipl.-Phys.
(86) Internationale Anmeldenummer: EP9601735
(87) Internationale Veröffentlichungsnummer: WO9641353

(56) Entgegenhaltungen:
- DE-A- 3 418 156
- US-A- 5 411 711

## Beschreibung

Die vorliegende Erfindung betrifft die elektrisch isolierende gasdichte Durchführung wenigstens zweier elektrischer Leiter durch einen metallischen Mantel eines Abgassystems eines Verbrennungsmotors, insbesondere eines elektrisch beheizbaren katalytischen Konverters.

Elektrisch isolierende gasdichte Durchführungen sind für die unterschiedlichsten Verwendungszwecke in großer Zahl durch den Stand der Technik bekannt.

Im Hinblick auf die aus Luftverschmutzung resultierende Folgen werden immer strengere Vorschriften zur Begrenzung des Abgasausstosses, insbesondere von Kraftfahrzeugen, erlassen. Mit den steigenden Anforderungen an eine Verringerung der Schadstoffe in Abgasen aus Kraftfahrzeugen werden zunehmend komplexere Abgasreinigungssysteme für Verbrennungskraftmaschinen eingesetzt. Insbesondere zur Verringerung des Schadstoffausstosses während der Kaltstartphase eines Verbrennungsmotors werden neben einem geregelten Dreiwegekatalysator elektrisch beheizbare katalytische Konverter eingesetzt. Eine solche Anordnung ist z.B. durch die WO 92/02714 bekannt. Problematisch bei solchen elektrisch beheizbaren katalytischen Konvertern ist die elektrische Durchführung elektrischer Leiter von einer Spannungsquelle zu dem elektrisch beheizbaren katalytischen Konverter. Ein Lösungsvorschlag für eine elektrische Durchführung ist durch die WO 94/18442 bekannt. Durch die WO 94/18442 wird vorgeschlagen, die elektrisch isolierende gasdichte Durchführung so auszubilden, daß diese in zwei hintereinander liegende Abschnitte unterteilt ist, von denen der erste näher am Abgassystem liegende Abschnitt zur elektrischen Isolierung und temperaturbeständig ausgebildet ist, jedoch nicht vollständig gasdicht zu sein braucht, während der zweite weiter vom Abgassystem entfernte Abschnitt als gasdichte und elektrisch isolierende Durchführung für geringere Temperaturen ausgebildet ist. Bei dieser bekannten Durchführung werden zwei elektrische Leiter nebeneinander durch den Mantel geführt.

Hiervon ausgehend liegt der vorliegenden Erfindung die Aufgabe zugrunde, die bekannte elektrisch isolierende gasdichte Durchführung so weiterzubilden, daß sie wirtschaftlicher herstellbar ist. Ferner soll durch die Ausbildung der Durchführung eine einfache Möglichkeit elektrische Leitung anzuschließen bereitgestellt werden.

Zur Lösung dieser Aufgabe wird eine elektrisch isolierende gasdichte Durchführung wenigstens zwei elektrischer Leiter durch einen metallischen Mantel eines Abgassystems einer Verbrennungskraftmaschine, insbesondere eines elektrisch beheizbaren katalytischen Konverters, wobei der Mantel im Bereich der Durchführung eine Hülse aufweist, durch die sich die Leiter erstrecken, vorgeschlagen, wobei die Leiter koaxial zueinander in der Hülse geführt sind.

Durch diese Ausbildung der Durchführung wird zur Stromversorgung nur ein einziger Anschluß zu dem elektrisch beheizbaren katalytischen Konverter benötigt. Als Anschlußkabel kann eine koaxiale Leitung verwendet werden, wodurch eine Verringerung von elektromagnetischen Impulsen erreicht wird. Ferner wird der Platzbedarf verringert. Ein weiterer Vorteil der koaxialen Durchführung wird darin gesehen, daß diese mit den be-kannten Methoden der Bolzenverschweißung an entsprechende Anschlüsse oder Strukturen des katalytischen Konverters angebracht werden kann.

Vorteilhafte Weitergestaltungen der erfindungsgemäßen elektrisch isolierenden gasdichten Durchführung sind Gegenstand der Unteransprüche.

Bevorzugt wird eine Ausführungsform, bei der das als Isoliermaterial ein gepreßtes Pulvergemisch aus Magnesiumoxyd und Aluminiumoxyd (Al₂O₃) vorhanden ist. Die Gasdichtigkeit wird dadurch erreicht, daß die Durchführung wenigstens an einer ihrer Stirnseiten gasdicht versiegelt ist.

Gemäß einem weiteren Gedanken wird vorgeschlagen, zur gasdichten Ausbildung der Durchführung als Versiegelungsmaterial Glas zu verwenden. Als Versiegelungsmaterial kann auch Emaille verwendet werden. Das Versiegelungsmaterial Glas oder Emaille kann auch vorteilhafterweise zur gasdichten Ausbildung der Durchführung wenigstens zwei elektrischer Leiter durch einen metallischen Mantel eines Abgassystems einer Verbrennungskraftmaschine, insbesondere eines elektrisch beheizbaren katalytischen Konverters, wobei der Mantel im Bereich der Durchführung eine Hülse aufweist, durch die sich die Leiter erstrecken und nicht koaxial, sondern nebeneinander angeordnet sind, verwendet werden. Das Versiegelungsmaterial weist ein derart hohen Schmelzpunkt auf, daß die Versiegelung in einer unmittelbaren Nähe zum Konverter erfolgen kann.

Zur Verringerung des Herstellungsaufwandes wird zur Gasdichtigkeit der Durchführung und der elektrischen Isolierung plasmagespritztes Aluminiumoxyd vorgeschlagen. Hierdurch wird in einem Herstellungsgang sowohl die elektrische Isolierung als auch die Gasdichtigkeit erreicht.

Die gleichen Vorteile, wie plasmagespritztes Aluminiumoxyd wird durch keramische Vergußmassen erreicht.

Weitere Vorteile und Merkmale werden anhand eines Ausführungsbeispiels erläutert. In der Zeichnung zeigt
- Figur 1: schematisch den Querschnitt durch eine Durchführung an einem elektrisch beheizbaren Wabenkörper und
- Figur 2: eine Draufsicht der Durchführung nach Figur 1.

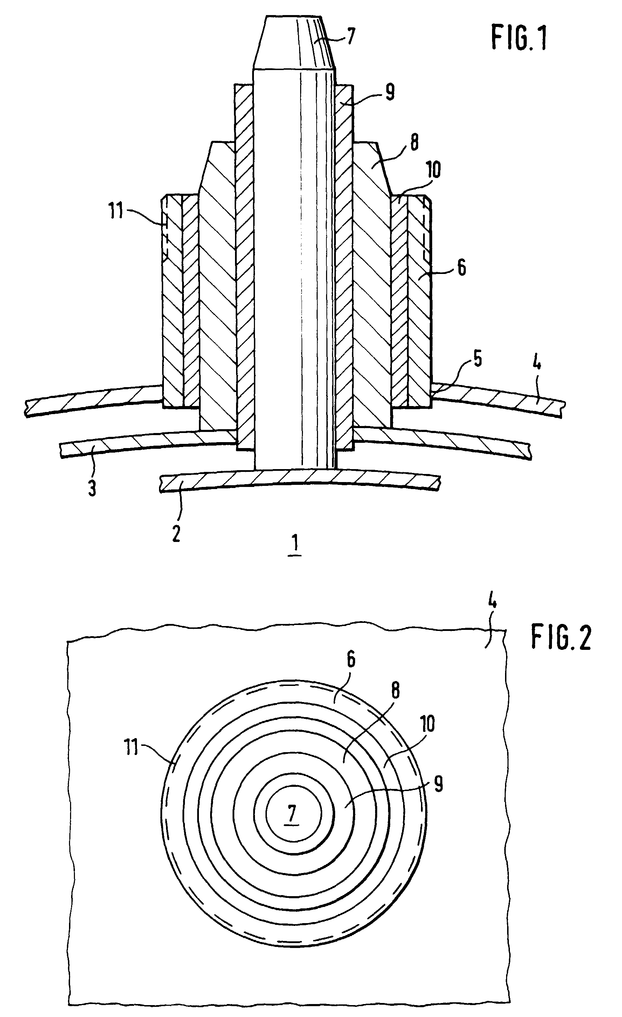

Figur 1 zeigt nur schematisch angedeutet den inneren Aufbau eines elektrisch beheizbaren Wabenkörpers 1 in einem Abgassystem. In dem Wabenkörper 1 befinden sich elektrisch leitende Strukturen 2, 3 zur Einleitung des elektrischen Stromes. Bei den elektrisch leitenden Strukturen kann es sich um wenigstens teilweise strukturierten metallischen Bleche handeln. Der Aufbau eines solchen Wabenkörpers ist beispielsweise in der WO 92/02714 beschrieben. Das Abgassystem ist von einem Mantel 4 umschlossen. Bei dem Mantel 4 kann es sich um einstückiges rohrförmiges Gehäuse handeln. Der Mantel 4 kann auch aus zwei Schalen bestehen. In dem Mantel 4 ist eine Durchgangsöffnung 5 ausgebildet, in welcher eine Hülse 6 hineinragt. Die Hülse 6 kann mit dem Mantel 4 stofflich verbunden, insbesondere verschweißt, oder verlötet sein. Wie aus der Darstellung ersichtlich ist, ragt die Hülse 6 in den Wabenkörper 1 teilweise hinein. Die Hülse 6 kann auch glattflächig mit der inneren Fläche des Mantels 4 abschließen.

In der Hülse 6 sind zwei koaxial zueinander angeordneten elektrischen Leiter 7, 8 angeordnet. Die Leiter 7, 8 sind gegeneinander elektrisch isoliert. Die elektrische Isolierung wird durch eine Isolationsschicht 9 gebildet. Bei der Isolationsschicht 9 kann es sich um plasmagespritztes Aluminiumoxyd (Al₂O₃) handeln. Der äußere, rohrförmige Leiter 8 ist gegenüber der Hülse 6 elektrisch durch eine Isolationsschicht 10 isoliert.

Das in den Wabenkörper 1 hineinragende Ende des zentral angeordneten Leiters 7 ist mit der Struktur 2 verbunden. Ebenso ist der Endbereich des koaxial zum zentral angeordneten Leiter 7 angeordneten Leiter 8 mit einer Struktur 3 verbunden. Die Verbindung der Leiter 7, 8 mit den Strukturen 2, 3 kann durch Schweißen oder Hartlöten erfolgen.

Die aus dem Wabenkörper 1 herausragenden Enden der Leiter 7, 8 sind konisch ausgebildet. Ein entsprechender Anschlußadapter, welcher nicht dargestellt ist, weist zu den konischen Enden der Leiter 7, 8 entsprechende konisch ausgebildete Aufnahmen auf, wodurch ein zuverlässiger elektrischer Kontakt zwischen den Leitern 7 bzw. 8 mit einem entsprechenden koaxialen Anschlußkabel geschaffen werden kann. Zur Befestigung des Anschlußkabels ist an der Hülse 6 ein äußeres Gewinde 11 vorgesehen, auf welches eine Überwurfmutter aufschraubbar ist.

### BEZUGSZEICHENLISTE

- 1: Wabenkörper
- 2, 3: Struktur
- 4: Mantel
- 5: Durchgangsöffnung
- 6: Hülse
- 7, 8: Leiter
- 9, 10: Isolierschicht
- 11: Außengewinde

## Patentansprüche

1. Elektrisch isolierende gasdichte Durchführung wenigstens zweier elektrischer Leiter (7, 8) durch einen metallischen Mantel (4) eines Abgassystems einer Verbrennungskraftmaschine, insbesondere eines elektrisch beheizbaren katalytischen Konverters, wobei der Mantel (4) im Bereich der Durchführung eine Hülse (6) aufweist, durch die sich die Leiter (7, 8) erstrecken, dadurch gekennzeichnet, daß die Leiter (7, 8) koaxial zueinander geführt sind.

2. Durchführung nach Anspruch 1, dadurch gekennzeichnet, daß die Leiter (7, 8) konzentrisch zueinander geführt sind.

3. Durchführung nach Anspruch 1 oder 2, dadurch gekennzeichnet, daß jeder Leiter (7, 8) wenigstens an einem Ende der Hülse einen aus dieser sich heraus erstreckenden Abschnitt aufweist, der teilweise elektrisch isoliert ist, wobei die Länge eines jeden Abschnittes von innen nach außen abnimmt.

4. Durchführung nach einem der Ansprüche 1 bis 3, dadurch gekennzeichent, daß als Isoliermaterial (9, 10) ein gepreßtes Pulvergemisch aus MgO und/oder Al₂O₃ vorhanden ist.

5. Durchführung nach einem der Ansprüche 1 bis 4, dadurch gekennzeichnet, daß die Durchführung wenigstens an einer ihrer Stirnseiten gasdicht versiegelt ist.

6. Durchführung nach Anspruch 5, dadurch gekennzeichnet, daß als Versiegelungsmaterial Glas vorhanden ist.

7. Durchführung nach Anspruch 5, dadurch gekennzeichnet, daß als Versiegelungsmaterial Emaille vorhanden ist.

8. Durchführung nach einem der Ansprüche 1 bis 3, dadurch gekennzeichent, daß als Isoliermaterial (9, 10) plasmagespritztes Al₂O₃ vorhanden ist.

9. Durchführung nach einem der Ansprüche 1 bis 3, dadurch gekennzeichent, daß als Isoliermaterial (9, 10) keramische Vergußmasse vorhanden ist.

10. Durchführung nach einem der Ansprüche 1 bis 9, dadurch gekennzeichnet, daß die Durchführung sich in einem Bereich geringer Abgssystemtemperatur erstreckt.

## Claims

1. Electrically insulating gas-tight penetration of at least two electrical conductors (7. 8) through a metal casing (4) of an exhaust system of an internal combustion engine, in particular of an electrically heatable catalytic converter, wherein in the region of the penetration the casing (4) has a sheath (6) through which the conductors (7, 8) extend, characterised in that the conductors (7, 8) are disposed coaxially to each other.

2. Penetration according to claim 1 characterised in that the conductors (7, 8) are arranged concentrically to each other.

3. Penetration according to claim 1 or claim 2 characterised in that each conductor (7, 8) has at least at one end of the sheath a portion which extends out of said sheath and which is partially electrically insulated. wherein the length of each section decreases from the inside outwardly.

4. Penetration according to one of claims 1 to 3 characterised in that a compressed powder mixture of MgO and/or Al₂O₃ is present as the insulating material (9, 10).

5. Penetration according to one of claims 1 to 4 characterised in that the penetration is sealed gas-tightly at least at one of its ends.

6. Penetration according to claim 5 characterised in that glass is present as the sealing material.

7. Penetration according to claim 5 characterised in that enamel is present as the sealing material.

8. Penetration according to one of claims 1 to 3 characterised in that plasma-sprayed Al₂O₃ is present as the insulating material (9, 10).

9. Penetration according to one of claims 1 to 3 characterised in that a ceramic casting material is present as the insulating material (9, 10).

10. Penetration according to one of claims 1 to 9 characterised in that the penetration extends in a region of low exhaust system temperature.

## Revendications

1. Passage électriquement isolant étanche au gaz d'au moins deux conducteurs électriques (7, 8) à travers une enveloppe métallique (4) d'un système de gaz d'échappement d'un moteur à combustion interne, notamment d'un convertisseur catalytique pouvant être chauffé électriquement, l'enveloppe (4) comportant dans la zone du passage une douille (6) à travers laquelle s'étendent les conducteurs (7, 8), caractérisé en ce que les conducteurs (7, 8) sont positionnés coaxialement l'un par rapport à l'autre.

2. Passage selon la revendication 1, caractérisé en ce que les conducteurs (7, 8) sont positionnés de façon concentrique l'un par rapport à l'autre.

3. Passage selon la revendication 1 ou 2, caractérisé en ce que chaque conducteur (7, 8) comporte, au moins au niveau d'une extrémité de la douille, une section s'étendant en dehors de cette dernière qui est partiellement isolée électriquement, la longueur de chaque section diminuant de l'intérieur vers l'extérieur.

4. Passage selon l'une quelconque des revendications 1 à 3, caractérisé en ce qu'on prévoit en tant que matériau isolant (9, 10) un mélange pulvérulent compacté en MgO et/ou en Al₂O₃.

5. Passage selon l'une quelconque des revendications 1 à 4, caractérisé en ce que le passage est scellé de façon étanche au gaz, au moins sur l'une de ses faces frontales.

6. Passage selon la revendication 5, caractérisé en ce que du verre est prévu en tant que matériau de scellement.

7. Passage selon la revendication 5, caractérisé en ce que de l'émail est prévu en tant que matériau de scellement.

8. Passage selon l'une quelconque des revendications 1 à 3, caractérisé en ce que du Al₂O₃ pulvérisé au plasma est prévu en tant que matériau isolant (9, 10).

9. Passage selon l'une quelconque des revendications 1 à 3, caractérisé en ce qu'une masse de scellement céramique est prévue en tant que matériau isolant (9, 10).

10. Passage selon l'une quelconque des revendications 1 à 9, caractérisé en ce que le passage s'étend dans une zone de faible température du système de gaz d'échappement.
